# EUROPÄISCHE PATENTSCHRIFT

(11) **EP 2 264 342 B1**
(45) Veröffentlichungstag und Bekanntmachung des Hinweises auf die Patenterteilung: **18.12.2019**
(21) Anmeldenummer: 10165627.0
(22) Anmeldetag: 11.06.2010
(51) Int. Cl.: F16K 1/24

(54) **ANORDNUNG UMFASSEND EINE VAKUUMKAMMER, EINE VAKUUMPUMPE UND EIN PLATTENVENTIL**
ARRANGEMENT COMPRISING A VACUUM CHAMBER, A VACUUM PUMP AND A PLATE VALVE
DISPOSITIF COMPRENANT UNE CHAMBRE À VIDE, UNE POMPE À VIDE ET UNE SOUPAPE À PLATEAU

(30) Priorität: 11.06.2009 CH 9092009
(43) Veröffentlichungstag der Anmeldung: 22.12.2010
(73) Patentinhaber: HSR AG, 9496 Balzers (LI)
(72) Erfinder: Kohler, Marcel, 9496 Balzers (LI); Vogt, Herbert, 9496 Balzers (LI); Frick, Urs, 9475 Sevelen (CH)
(74) Vertreter: Hasler, Erich

(56) Entgegenhaltungen:
- BE-A- 530 594
- DE-A1- 1 500 013
- DE-C- 912 648
- FR-A- 1 342 912
- JP-A- S6 196 271

## Beschreibung

Die vorliegende Erfindung betrifft eine Anordnung umfassend eine Vakuumkammer, eine Vakuumpumpe und ein dazwischen angeordnetes Plattenventil gemäss Oberbegriff von Anspruch 1.

Im Stand der Technik ist ein Plattenventil bekannt mit einem Gehäuse mit einem ersten Anschlussflansch mit einer ersten Öffnung zur Montage an einem zu evakuierenden Behälter oder Anlage und einem zweiten Anschlussflansch mit einer zweiten Öffnung zur Montage einer Unterdruckquelle, vorzugsweise einer Vakuumpumpe, wie Diffusionspumpe, Turbomolekularpumpe und dergleichen. Die zweite Öffnung ist an der dem zweiten Anschlussflansch abgewandten Seite als Ventilsitz ausgebildet, welcher durch eine bewegliche Ventilplatte verschliessbar ist. Axial gegenüberliegend zum zweiten Anschlussflansch ist ein dritter Anschlussflansch vorgesehen, welcher durch eine Kappe verschlossen ist. In der Kappe ist eine Betätigungseinrichtung angeordnet, welche ein axial verschiebbares Betätigungsorgan besitzt. Das distale Ende des axial verschiebbaren Betätigungsorgans ist am Plattenventil festgemacht. Zum Öffnen des Plattenventils wird die Ventilplatte um eine bestimmte Distanz angehoben, sodass ein Durchgang zwischen der ersten und zweiten Öffnung geschaffen ist.

Nachteilig am beschriebenen Ventil ist, dass im Offenzustand des Ventils die Ventilplatte sich im Raum zwischen dem ersten und zweiten Anschlussflansch befindet und den Leitwert dadurch beeinträchtigt. Dieses Problem könnte nur dadurch gelöst werden, dass die Ventilplatte noch weiter angehoben würde, sodass diese sich praktisch ausserhalb des Öffnungsbereichs des ersten Anschlussflansches befinden würde. Dies erforderte jedoch ein noch längeres Betätigungsorgan, wodurch das bekannte Plattenventil noch sperriger würde. Um einen vernünftigen Kompromiss zwischen diesen gegenläufigen Anforderungen zu erzielen, wird die Ventilplatte daher soweit angehoben, dass diese ungefähr auf 2/3 der lichten Höhe des ersten Öffnung befindet.

Es befindet sich auf dem Markt ein Plattenventil, bei dem ein Betätigungsorgan den Ventildeckel über ein aufwändiges Hebelsystem zuerst nahezu linear vom Ventilsitz abhebt und anschliessend um 90 Grad verschwenkt. Dieses Plattenventil besitzt einen günstigen Leitwert, ist jedoch kompliziert aufgebaut und teuer in der Herstellung. Ferner benötigt das Betätigungsorgan viel Platz. Erwähntes Plattenventil ist in der Einleitung der Figurenbeschreibung detailliert beschrieben.

Im Weiteren zeigt die Offenbarung FR 1.342.912 ein Ventil zur Anwendung in der Vakuumtechnik. Insbesondere handelt es sich hier um ein Ventil mit aufeinander senkrecht angeordneten Öffnungen für Zugang und Anschluss und weiter einer Ventilklappe, welche im geöffneten Zustand ungefähr im 45°-Winkel gegenüber jeder der genannten Öffnungen angeordnet ist. Der Öffnungsmechanismus beinhaltet eine lineare Hebebewegung, wobei durch einen an der Innenwand des Ventils fixierten Finger die Ventilkappe gegenüber ihrer anfangs horizontalen Anordnung beim Heben schräggestellt wird. Aufgrund des langen Hebeweges benötigt diese Ventilausführung einen externen Hydraulikzylinder. Zudem beeinträchtigt auch diese Art der schrägen Öffnungsstellung der Ventilklappe zwischen Zugang und Anschluss den Leitwert.

Aufgabe der vorliegenden Erfindung ist es, eine Anordnung mit einem Plattenventil zur Verfügung zu stellen, welches einen maximalen Leitwert ermöglicht. Ein weiteres Ziel ist es, eine Anordnung mit einem Plattenventil vorzuschlagen, welches einen geringen Platzbedarf hat. Noch ein Ziel ist es, eine Anordnung mit einem Plattenventil bereitzustellen, welches einfach aufgebaut und mit geringen Kosten herstellbar ist.

Dieses und weitere Ziele werden durch eine Anordnung gemäss den Merkmalen des Patentanspruchs 1 gelöst. Vorteilhafte Ausführungsformen sind in den Unteransprüchen definiert.

Erfindungsgemäss ist der dritte Anschlussflansch mit der Betätigungseinrichtung axial gegenüber dem ersten Anschlussflansch angeordnet, und die Betätigungseinrichtung weist ein in einer Verschieberichtung linear verschiebbares Betätigungsorgan auf. Die Anordnung der Betätigungseinrichtung direkt gegenüberliegend dem Ventilsitz hat den Vorteil, dass lediglich ein linear verschiebbares Betätigungsorgan für die Ausführung der Schliess- resp. Öffnungsbewegung nötig ist. Entsprechend ist das Plattenventil einfach und kostengünstig herstellbar. Durch eine geradlinige Schliessbewegung kann auch eine grosse Schliesskraft aufgebracht werden, sodass eine zuverlässige Dichtung zwischen der Ventilplatte und dem Ventilsitz erfolgen kann.

Die Betätigungseinrichtung besitzt vorzugsweise einen Verschwenkmechanismus, welcher mit dem linear verschiebbaren Betätigungsorgan gekoppelt und derart ausgebildet ist, dass bei der linearen Verschiebung des Betätigungsorgans eine Schwenkbewegung erzeugt wird. Dies hat den Vorteil, dass durch eine Linearbewegung auch eine Schwenkbewegung der Ventilplatte bewirkt werden kann. das Plattenventil sehr niedrig baut, da eine Schwenkbewegung der Ventilplatte einen geringeren Raumbedarf aufweist, als wenn die Ventilplatte ausschliesslich linear bewegt werden würde.

Zweckmässigerweise ist der Verschwenkmechanismus durch eine Hebelanordnung gebildet. Eine Hebelanordnung ist konstruktiv einfach und kostengünstig herstellbar.

In einer besonders bevorzugten Ausführungsvariante ist der Verschwenkmechanismus durch eine Kulissenanordnung gebildet. Die Kulissenanordnung hat den Vorteil, dass Führungsbahnen, welche durch eine Überlagerung von einer rotatorischen und einer linearen Bewegung zustande kommen, sehr einfach und zuverlässig realisierbar sind.

Erfindungsgemäss erstreckt sich der zweite Anschlussflansch in einer Ebene, welche orthogonal zur Ebene der verschwenkten Ventilplatte steht. Dies hat den Vorteil, dass die Ventilplatte in dem Durchgang zwischen dem ersten und zweiten Anschlussflansch so positioniert, dass der Leitwert nicht wesentlich beeinträchtigt wird.

Vorteilhaft ist das Betätigungsorgan gelenkig an der Ventilplatte angelenkt und um eine erste Schwenkachse relativ zur Ventilplatte verschwenkbar. Dies hat den Effekt, dass die Ventilplatte sowohl eine lineare als auch eine rotatorische Bewegung ausführen kann.

Damit die lineare Bewegung des Betätigungsorgans in eine Verschwenkbewegung transformiert wird, ist an der zum Gehäuseinneren orientierten Seite der Ventilplatte zweckmässigerweise ein Halter angeordnet, mit einem ersten Anlenkpunkt für das Betätigungsorgan und einem vom ersten Anlenkpunkt beabstandeten zweiten Anlenkpunkt für einen verschwenkbaren Betätigungshebel. Dabei ist das erste Ende des Betätigungshebels vorteilhaft um eine durch den zweiten Anlenkpunkt definierte zweite Schwenkachse und das zweite Ende durch eine dritte stationäre Schwenkachse verschwenkbar. Diese Konstruktionsmerkmale haben den Vorteil, dass die Ventilplatte über eine einfache Mechanik zwangsgeführt ist und ein einziger linearer Antrieb eine translatorische und eine rotatorische Bewegung generiert.

Dadurch dass der zweite Anlenkpunkt weiter von der Ventilplatte entfernt ist als der erste Anlenkpunkt wird an dem Halter vorteilhaft ein Hebel erzeugt, durch den die Drehbewegung der Ventilplatte in die gewünschte Richtung ermöglicht ist.

Der Halter ist mit Vorteil durch zwei voneinander beabstandete Stege gebildet, welche Stege sich senkrecht von der Ventilplatte erheben. Dadurch weist der Halter eine ausreichende Stabilität auf, um die Bewegungskräfte des Betätigungsorgans zuverlässig auf die Ventilplatte zu übertragen.

Damit der Betätigungshebel an seinem zweiten Ende ausreichend gestützt ist, ist vorzugsweise ein Support vorgesehen, an welchem der Betätigungshebel angelenkt ist.

Der Support stützt sich zweckmässigerweise entweder am Gehäuse oder an der Betätigungseinrichtung ab. Stützt sich der Support an der Betätigungseinrichtung ab, so stehen keine bewegten Teile direkt oder indirekt mit dem Gehäuse in Verbindung. Die Betätigungseinrichtung ist so gemeinsam mit allen bewegten Teilen aus dem Gehäuse entfernbar. Dies erleichtert Wartungs- und Reparaturarbeiten signifikant, da alle bewegten Teile leicht zugänglich sind.

Vorteilhaft ist am ersten Ende des Betätigungshebels ein Langloch vorgesehen. Dies hat den Vorteil, dass eine Kreisbewegung des Betätigungshebels ermöglicht ist und gleichzeitig der Halter durch den Betätigungshebel verschwenkbar ist.

In einer bevorzugten Ausführungsvariante ist die Betätigungseinrichtung im Gehäuse angeordnet. Dies hat den Vorteil, dass das Plattenventil sehr kompakt gebaut ist, ohne zusätzliche Anbauteile oder Erhebungen an seiner Gehäuseaussenwand aufzuweisen.

Mit Vorteil ist eine konvex gewölbte Kappe vorgesehen, an welcher die Betätigungseinrichtung inwendig angeordnet ist. Dadurch ragt die Betätigungseinrichtung nur geringfügig in den Durchgang zwischen dem ersten und dem zweiten Anschlussflansch und beeinträchtigt den Leitwert nur unwesentlich.

Damit eine besonders einfache und rasche Wartung des Plattenventils ermöglicht ist, verschliesst die gewölbte Kappe den dritten Anschlussflansch. Bei Wartungsarbeiten ist lediglich die Verbindung zum dritten Anschlussflansch zu lösen, dann ist die gewölbte Kappe mitsamt allen beweglichen Teilen aus dem Gehäuse entfernbar.

Damit der Ventildeckel eine ausreichende Stabilität gegenüber Druckdifferenzen aufweist, die durch ein Hochvakuum auf der Niedrigdruckseite und Normaldruck im Ventilgehäuse entstehen, ist der Deckel vorzugsweise nach innen gewölbt.

Nachfolgend wird die Erfindung unter die Bezugnahme auf die Figuren beispielhaft erläutert. Dabei werden in den verschiedenen Ausführungsbeispielen gleiche Teile mit gleichen Bezugsziffern bezeichnet. Es zeigt:
- Figur 1: ein Plattenventil des Stands der Technik in einer Seitenansicht,
- Figur 2: eine Frontansicht eines ersten Ausführungsbeispiels eines Plattenventils der erfindungsgemässen Anordnung,
- Figur 3: eine Seitenansicht des Plattenventils aus Figur 2, und
- Figur 4: eine Frontansicht einer weiteren Ausführungsvariante des Plattenventils der erfindungsgemässen Anordnung.

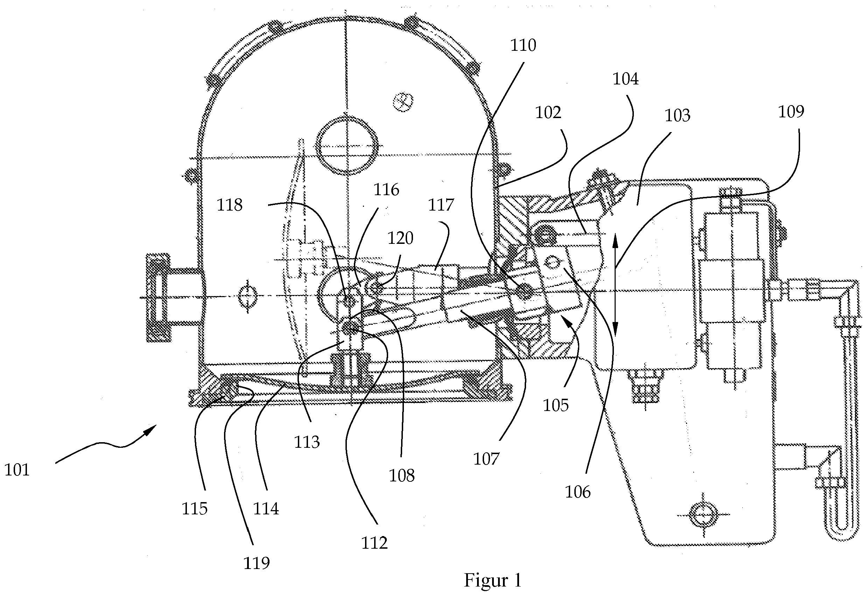

In Figur 1 ist ein Plattenventil 101 dargestellt, welches sich seit mehreren Jahren auf dem Markt befindet. Das Plattenventil besitzt ein Gehäuse 102, welches durch eine Einlassöffnung (in Figur 1 nicht gezeigt), durch welche Atmosphäre angesaugt wird, und durch eine Auslassöffnung 119, durch welche Atmosphäre das Plattenventil 101 verlässt, verschwächt ist. An der Mantelfläche des Gehäuses 102 ist eine Betätigungseinrichtung 103 vorgesehen. Die Betätigungseinrichtung 103 lenkt über ein Betätigungsorgan 104 einen L-förmigen Hebel 105 an. Das Betätigungsorgan 104 ist mit dem L-förmigen Hebel 105 am Ende dessen kürzeren Schenkels 106 verbunden. Am Ende des längeren Schenkels 107 ist eine Durchgangsöffnung 108 vorgesehen.

Bewegt sich das Betätigungsorgan 104 in Richtung der Bewegungsrichtung 109 vertikal nach unten, wird der L-förmige Hebel 105 um eine stationäre Drehachse 110 gegen den Uhrzeigersinn verschwenkt. In der Durchgangsöffnung 108 des Schenkels 107 ist ein Bolzen 112 drehbar aufgenommen, welcher über einen Steg 113 mit einem Ventildeckel 114 gelenkig verbunden ist.

Zu Beginn der Drehbewegung des L-förmigen Hebels 105 gegen den Uhrzeigersinn vollführt der Ventildeckel 114, angelenkt durch den Steg 113, eine nahezu lineare Bewegung, welche ihn von seinem Ventilsitz 115 weg bewegt. Während der Linearbewegung ist der Ventildeckel 114 zusätzlich durch einen Führungshebel 116 angelenkt. Der Führungshebel 116 ist an einem Support 117 über eine stationäre Schwenkachse 120 gelenkig gestützt. Der Support 117 ist fest mit dem Zylindermantel des Gehäuses 102 verbunden.

Im Anschluss an die nahezu lineare Bewegung geht der Ventildeckel 114 in eine Verschwenkbewegung gegen den Uhrzeigersinn über. Dabei dreht sich der Ventildeckel 114 um eine mobile Schwenkachse 118, welche am dem Ventildeckel 114 abgewandten Ende des Stegs 113 vorgesehen ist. Während der nahezu linearen Bewegung des Ventildeckels 114 bewegt sich die mobile Schwenkachse 118 auf einer Kreisbahn um die stationäre Schwenkachse 120, während der Verschwenkbewegung des Ventildeckels 114 ist die Position der mobilen Schwenkachse 118 relativ zur stationären Schwenkachse 120 unveränderlich. Damit diese Verschwenkbewegung zustande kommt, wird der Ventildeckel 114 weiterhin durch den L-förmigen Hebel 105 und den Steg 113 angelenkt, wobei während der Verschwenkbewegung der Bolzen 112 in der Durchgangsöffnung 108 rotiert.

Zur Führung der Verschwenkbewegung des Ventildeckels 114 um den Drehpunkt 118 ist der Steg 113 durch den Führungshebel 116 gehalten, der seinerseits durch den Support 117 gelenkig gehalten ist. Die Endstellung des Ventildeckels 114 nach der Verschwenkbewegung um 90 Grad ist in Figur 1 strichliert dargestellt. Zum Schliessen des Plattenventils 101 wird der oben beschriebene Öffnungsvorgang vice versa durchgeführt.

Der fachkundige Leser erkennt, dass das Plattenventil 101 einen günstigen Leitwert besitzt, der dadurch zustande kommt, dass das Plattenventil 101 in der geöffneten Position einer Gasströmung, welche sich von einer Einlassöffnung zu einer Auslassöffnung 119 bewegt, nur einen geringen Widerstand entgegensetzt.

Als Nachteile des Plattenventils 101 sind unmittelbar dessen komplizierter Aufbau mit einer grossen Anzahl von bewegten Teilen und der grosse Platzbedarf des Betätigungsorgans 104 zu erkennen. Demzufolge ist das vorliegende Plattenventil in seiner Herstellung teuer. Ferner gestalten sich Wartungs- bzw. Reparaturarbeiten als aufwändig, da es nicht möglich ist, den L-förmigen Hebel 105 mitsamt dem Ventildeckel 114 aus dem Gehäuse 102 zu entfernen, ohne das Gehäuse 102 aus dem Gesamtpumpstand auszubauen.

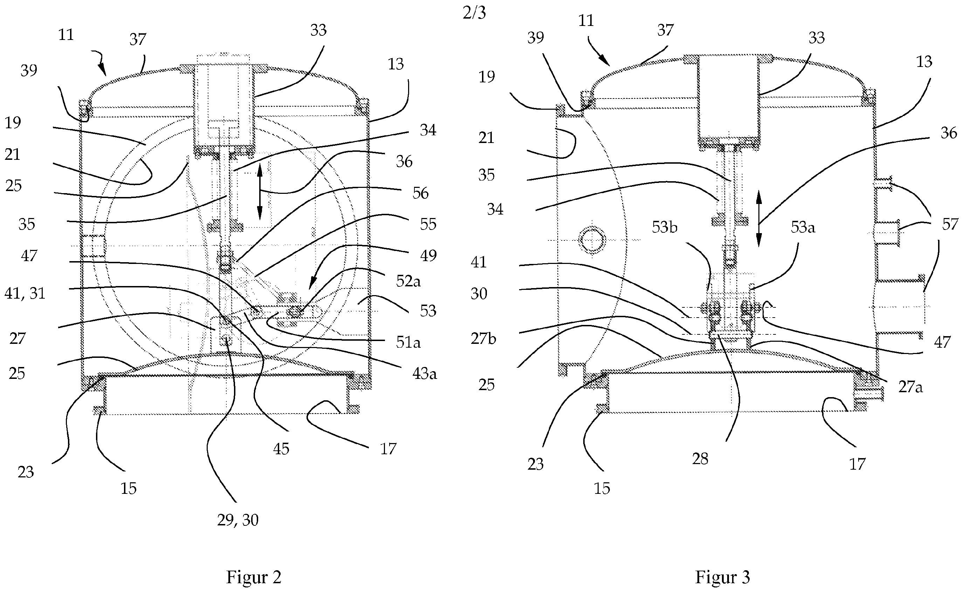

Die Figuren 2 und 3 zeigen ein erfindungsgemässes Plattenventil 11 mit einem Gehäuse 13. An dem Gehäuse 13 sind ein erster Anschlussflansch 15 mit einer ersten Öffnung 17 und ein zweiter Anschlussflansch 19 mit einer zweiten Öffnung 21 vorgesehen. Der erste Anschlussflansch 15 dient der Verbindung zu einer Niedrigdruckseite, beispielsweise dem Anschluss einer Vakuumpumpe. An dem zweiten Anschlussflansch 19 ist das Plattenventil 11 beispielsweise mit einer zu evakuierenden Kammer verbunden. An dem zweiten Anschlussflansch 19 kann z. B. eine zu evakuierende Vakuumkammer angeschlossen sein. An der der ersten Öffnung 17 abgewandten Seite ist ein Ventilsitz 23 vorgesehen. Der Ventilsitz 23 wirkt mit einer Ventilplatte 25 zusammen, um den ersten Anschlussflansch 15 gegenüber dem zweiten Anschlussflansch 19 gasdicht zu trennen. Die Ventilplatte 25 ist als ein ins Innere des Gehäuses 13 gewölbter Deckel ausgebildet. Durch diese gewölbte Bauform ist ein Durchbiegen der Ventilplatte 25 bei geschlossenem Ventil verhindert, wenn im Ventilgehäuse Normaldruck und auf der Niedrigdruckseite Hochvakuum herrscht.

An der zum Gehäuseinneren orientierten Seite der Ventilplatte 25 ist mittig ein Halter 27 angeordnet, an welchem ein Betätigungsorgan 35 einer Betätigungseinrichtung 33 angelenkt ist. Die Abdichtung der Betätigungseinrichtung 33 gegenüber dem Gehäuseinneren erfolgt über einen Membranbalg 34. Der Membranbalg 34 kann die Bewegung des Betätigungsorgans mitmachen. Alternativ kann die Abdichtung der Betätigungseinrichtung über eine Radialdichtung erfolgen. Das Betätigungsorgan 35 steht mit der Betätigungseinrichtung 33 in Verbindung und ist durch diese in einer Verschieberichtung 36 linear verschieblich. Im gezeigten Ausführungsbeispiel ist die Betätigungseinrichtung 33 durch ein Kolben/Zylinderaggregat 33 gebildet, welches pneumatisch betätigbar ist. Denkbar wäre auch eine hydraulische oder elektrische Betätigung des Betätigungsorgans. Das Kolben/Zylinderaggregat ist innerhalb des Gehäuses 13 und mittig an einer nach aussen gewölbten Kappe 37 angeordnet. Die gewölbte Kappe 37 ist an einem dritten Anschlussflansch 39 des Gehäuses 13 befestigt. Die Wölbung der Kappe 37 erlaubt die teilweise Aufnahme des Kolben/Zylinderaggregats 33, sodass dieses nur geringfügig in den Durchgang zwischen dem ersten und dem zweiten Anschlussflansch 15,19 ragt. Dies hat den Vorteil, dass der Leitwert durch die Betätigungseinrichtung 33 nicht wesentlich beeinträchtigt wird.

Der Halter 27 und das Betätigungsorgan 35 sind um eine durch einen ersten Anlenkpunkt 29 verlaufende erste Schwenkachse 30 verschwenkbar. Ein Verschwenken der Ventilplatte 25 und dem daran angeordnetem Halter 27 wird bei der Axialverschiebung des Betätigungsorgans 33 durch einen stationären Betätigungshebel 43 bewirkt, welcher mit einem ersten Ende in Abstand zum ersten Anlenkpunkt 29 an einem zweiten Anlenkpunkt 31 am Halter 27 angelenkt ist. Durch diesen zweiten Anlenkpunkt 31 ist eine zweite Schwenkachse 41 definiert. Mit seinem zweiten Ende ist der Betätigungshebel 43 an einem fixen Support 49 angelenkt (dritte Schwenkachse 47), welcher sich an der Innenwand des Gehäuses 13 abstützt. Wird nun die Ventilplatte 25 durch das Betätigungsorgan 35 von der in Fig. 1 gezeigten Verschlussstellung angehoben, so wird der Halter 27 und damit die Ventilplatte 25 durch den Betätigungshebel 43 von der waagrechten Stellung in eine senkrechte Stellung verschwenkt (in Fig. 1 strichliert eingezeichnet). Um eine Kreisbewegung des Betätigungshebels 43 zu ermöglichen, ist an dessen ersten Ende ein Langloch 45 vorgesehen, in welchem ein Achsstift verschieblich ist.

Im Ausführungsbeispiel gemäss Figur 3 ist der Halter 27 durch zwei in Abstand von einander angeordnete Stege 27a,b gebildet, welche senkrecht von der Ventilplatte 25 abstehen. Die beiden Stege sind durch einen Bolzen 28 miteinander verbunden. Der Bolzen 28 erstreckt sich durch ein kreisförmiges Loch am Ende des Betätigungsorgans 35. An den beiden Stegen 27a,b sind die Betätigungshebel 43a,b angelenkt (In Figur 3 ist nur der Betätigungshebel 43a erkennbar). Die Betätigungshebel 43a,b sind ihrerseits mit ihren zweiten Enden an einer Justiereinrichtung angelenkt. Die Justiereinrichtung ist durch zwei Hebel 51a,b gebildet, die am Support 49 verschieblich angeordnet sind. Zu diesem Zweck weisen die Hebel 51a,b zwei Langlöcher 52a,b auf, durch welche zwei Fixierschrauben geführt sind.

Eine Strebe 55 verbindet den Support 49 mit dem Betätigungsorgan 35, um letzteres zu stabilisieren und zu führen. Zu diesem Zweck ist an der Strebe 55 eine Hülse 56 angeordnet, durch welche sich das Betätigungsorgan 35 erstreckt.

An der Aussenwand des Gehäuses 13 ist eine Mehrzahl von Flanschen 57 vorgesehen. Die Flansche 57 dienen beispielsweise der Aufnahme von Messsonden, Ventilen oder Schaugläsern.

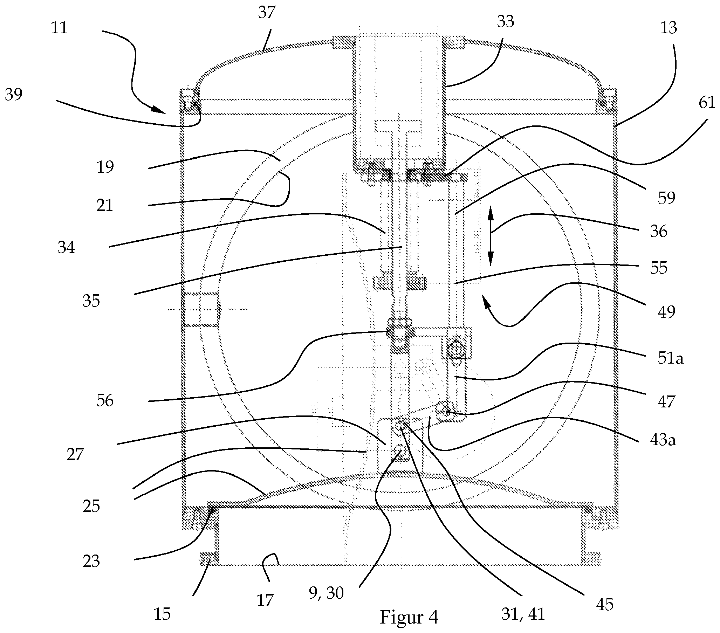

Figur 4 zeigt eine bevorzugte Ausführungsvariante, bei der der Support 49 an der Betätigungseinrichtung 33 abgestützt ist. In diesem Fall ist der Support 49 durch eine Stange 59 gebildet, welche an einem Ende über eine Befestigungsplatte 61 direkt an der Betätigungseinrichtung 33 befestigt ist. Das andere Ende der Stange 59 ist ähnlich wie in dem ersten Ausführungsbeispiel mit dem Betätigungsorgan 35 verbunden.

Diese Ausführungsvariante hat den Vorteil, dass alle Teile des Betätigungsmechanismus an der gewölbten Kappe 37 angeordnet sind und mit der Kappe 37, aus dem Gehäuse 13 herausziehbar sind. Eine Wartung oder ein Austausch aller bewegten Teile kann dadurch sehr rasch und einfach erfolgen.

Das erfindungsgemässe Plattenventil 11 funktioniert wie folgt: Eine an dem ersten Anschlussflansch 15 angeschlossene Vakuumpumpe evakuiert eine an dem zweiten Anschlussflansch 19 angeschlossene Kammer. Während des Evakuierungsvorgangs befindet sich die Ventilplatte 25 in einer Offenstellung (In Figur 2 strichliert dargestellt). In der Offenstellung steht die Ebene der Ventilplatte 25 orthogonal zur Ebene, in der sich der zweite Anschlussflansch 19 befindet.

Der Leitwert des erfindungsgemässen Plattenventils ist sehr hoch, da die abgesaugte Atmosphäre, welche durch die zweite Öffnung 21 in das Gehäuse 13 eintritt und das Gehäuse 13 über die erste Öffnung 17 verlässt, praktisch keine Angriffsflächen innerhalb des Gehäuses 13 vorfindet. Die Ventilplatte 25 steht in der Offenstellung in einem Anstellwinkel relativ zur Luftströmung, der den geringstmöglichen Widerstand generiert. Darüber hinaus liegt die Betätigungseinrichtung 33 grösstenteils ausserhalb der Luftströmung. Weitere Bauteile, welche sich innerhalb der Luftströmung befinden, besitzen nur kleine Oberflächen und tragen somit auch zu einem hohen Leitwert bei.

Ist in der Kammer der gewünschte Unterdruck erreicht, so wird die Kolben/Zylindereinheit 33 mit Druckluft beaufschlagt. Das Betätigungsorgan 35 wird linear in Verschieberichtung 36 aus der Kolben/Zylindereinheit 33 herausverschoben. Der Betätigungshebel 43 stützt sich während der Linearbewegung des Betätigungsorgans 35 mit seinem zweiten Ende an dem fixen Support 53 ab. Das erste Ende des Betätigungshebels 43 bewegt sich rotatorisch um die dritte stationäre Schwenkachse 47 gegen den Uhrzeigersinn. Über den zweiten Anlenkpunkt 31, an dem der Betätigungshebel 43 beispielsweise mit einem Achsstift mit dem Halter 27 verbunden ist, verschwenkt der Betätigungshebel 43 den Halter 27 und die Ventilplatte 25 ebenfalls gegen den Uhrzeigersinn. Die Ventilplatte 25 rotiert dabei um die erste Schwenkachse 30. Um eine Kreisbewegung des Betätigungshebels 43 zu ermöglichen, verschiebt sich ein Achsstift in dem Langloch 45 während der Verschwenkung des Halters 27, wobei das Langloch 45 als Kulisse und der Achsstift als Kulissenstein fungiert.

Die Ventilplatte 25 wird mit fortschreitender Linearbewegung des Betätigungsorgans 35 in Richtung der ersten Öffnung 17 über den Betätigungshebel weiter zwangsverschwenkt. Die Längen des Betätigungshebels 43, des Halters 27 und des Supports 49 sind genau so dimensioniert, dass die Ventilplatte sich in horizontaler Lage befindet, wenn der Betätigungshebel 43 horizontal ausgerichtet ist. In dieser Position befindet sich die Ventilplatte 25 in kurzem Abstand zentrisch oberhalb des Ventilsitzes 23. Durch ein abschliessendes lineares Absenken wird die Ventilplatte 25 in eine Verschlussstellung bewegt. In der Verschlussstellung wird die Ventilplatte 25 von dem Betätigungsorgan 35 fest auf den Ventilsitz 23 gepresst. Der oben beschriebene Vorgang wird vice versa durchgeführt, um die Ventilplatte wieder in die Offenstellung zu bewegen.

Ein Gedanke der Erfindung liegt darin, dass die Linearbewegung des Betätigungsorgans 35 durch den Betätigungshebel 43 in einem ersten Schritt in eine zwangsgeführte rotatorische Bewegung der Ventilplatte 25 transformiert wird und in einem zweiten Schritt die Ventilplatte 25 über eine kurze Distanz linear bewegt wird. Bei dem erfindungsgemässen Plattenventil 11 ist es von Bedeutung, dass die Längen von Halter 27, Betätigungshebel 43 und Support 49, sowie die Position der ersten, zweiten und dritten Schwenkachse 30,41,47 aufeinander abgestimmt sind.

Das Plattenventil 11 baut sehr niedrig und seine Höhe übersteigt nur unwesentlich den Durchmesser des zweiten Anschlussflansches 19. Die niedrige Bauhöhe wird dadurch erreicht, dass die Ventilplatte 25 nicht linear aus dem Durchströmungsbereich entfernt wird, sondern im Durchströmungsbereich verbleibt und in eine Position mit optimalem Leitwert verschwenkt wird. Der Schliess- bzw. Öffnungsmechanismus ist von einfacher Konstruktion und kostengünstig herzustellen.

### Legende:

- 101: Plattenventil
- 102: Gehäuse
- 103: Betätigungseinrichtung
- 104: Betätigungsorgan
- 105: L-förmiger Hebel
- 106: Kürzerer Schenkel
- 107: Längerer Schenkel
- 108: Durchgangsöffnung
- 109: Bewegungsrichtung
- 110: Drehachse
- 112: Bolzen
- 113: Steg
- 114: Ventildeckel
- 115: Ventilsitz
- 116: Führungshebel
- 117: Support
- 118: Mobile Schwenkachse
- 119: Auslassöffnung
- 120: Stationäre Schwenkachse
- 11: Plattenventil
- 13: Gehäuse
- 15: Erster Anschlussflansch
- 17: Erste Öffnung
- 19: Zweiter Anschlussflansch
- 21: Zweite Öffnung
- 23: Ventilsitz
- 25: Ventilplatte
- 27: Halter, Steg
- 28: Bolzen
- 29: Erster Anlenkpunkt
- 30: Erste Schwenkachse
- 31: Zweiter Anlenkpunkt
- 33: Betätigungseinrichtung
- 34: Membranbalg
- 35: Betätigungsorgan
- 36: Verschieberichtung
- 37: Gewölbte Kappe
- 39: Dritter Anschlussflansch
- 41: Zweite Schwenkachse
- 43a,b: Betätigungshebel
- 45: Langloch
- 47: Dritte stationäre Schwenkachse
- 49: Support
- 51a,b: Hebel
- 52a,b: Langlöcher
- 53a,b: Stege
- 55: Strebe
- 56: Hülse
- 57: Flanschen
- 59: Stange
- 61: Befestigungsplatte

## Patentansprüche

1. Anordnung umfassend eine Vakuumkammer, eine Vakuumpumpe und ein dazwischen angeordnetes Plattenventil (11) mit:
- einem Gehäuse (13) zur Verbindung der Vakuumkammer mit der Vakuumpumpe,
- einem ersten Anschlussflansch (15) mit einer ersten Öffnung (17) für die Verbindung zu einer Saugseite der Vakuumpumpe,
- einem zweiten Anschlussflansch (19) mit einer zweiten Öffnung (21) für die Verbindung des Ventils mit der zu evakuierenden Vakuumkammer,
- einem Ventilsitz (23), welcher auf der der ersten Öffnung (17) abgewandten Seite des ersten Anschlussflansches (15) vorgesehen ist,
einer Ventilplatte (25), welche mit dem Ventilsitz (23) zusammenwirken kann, einer Betätigungseinrichtung (33), welche mit der Ventilplatte (25) in Verbindung steht und ermöglicht, zum Öffnen des Ventils die Ventilplatte (25) vom Ventilsitz (23) abzuheben und zum Schliessen des Ventils die Ventilplatte (25) an den Ventilsitz (23) zu drücken, wobei beim Öffnen des Ventils in einem ersten Schritt ein Anheben der Ventilplatte (25) und in einem zweiten Schritt ein Verschwenken der Ventilplatte (25) erfolgt und vice versa beim Schliessen des Ventils die Ventilplatte (25) zuerst verschwenkt und in einem zweiten Schritt die Ventilplatte (25) an den Ventilsitz (23) gelegt wird, und
- einem dritten Anschlussflansch (39), an welchem die Betätigungseinrichtung (33) angeordnet ist, wobei der dritte Anschlussflansch (39) mit der Betätigungseinrichtung (33) axial gegenüber dem ersten Anschlussflansch (15) angeordnet und die Betätigungseinrichtung (33) durch ein in einer Verschieberichtung (36) linear verschiebbares Betätigungsorgan (35) gebildet ist,
**dadurch gekennzeichnet, dass**
in der Offenstellung die Ebene der Ventilplatte (25) orthogonal zur Ebene des zweiten Anschlussflansches (19) steht.

2. Anordnung nach Anspruch 1, **dadurch gekennzeichnet, dass** die Betätigungseinrichtung (33) einen Verschwenkmechanismus besitzt, welcher mit dem linear verschiebbaren Betätigungsorgan (35) in Verbindung steht und derart ausgebildet ist, dass bei der linearen Verschiebung des Betätigungsorgans (35) eine Schwenkbewegung erzeugt wird.

3. Anordnung nach Anspruch 2, **dadurch gekennzeichnet, dass** der Verschwenkmechanismus durch eine Hebelanordnung gebildet ist.

4. Anordnung nach einem der Ansprüche 2 bis 3, **dadurch gekennzeichnet, dass** der Verschwenkmechanismus durch eine Kulissenanordnung gebildet ist.

5. Anordnung nach einem der Ansprüche 1 bis 4, **dadurch gekennzeichnet, dass** das Betätigungsorgan (35) gelenkig an der Ventilplatte (25) angelenkt ist und um eine erste Schwenkachse (30) relativ zur Ventilplatte (25) verschwenkbar ist.

6. Anordnung nach einem der Ansprüche 1 bis 5, **dadurch gekennzeichnet, dass** an der zum Gehäuseinneren orientierten Seite der Ventilplatte (25) ein Halter (27) angeordnet ist, mit einem ersten Anlenkpunkt (29) für das Betätigungsorgan (35) und einem vom ersten Anlenkpunkt (29) beabstandeten zweiten Anlenkpunkt (31) für einen verschwenkbaren Betätigungshebel (43), dessen erstes Ende um eine durch den zweiten Anlenkpunkt (31) definierte zweite Schwenkachse (41) und dessen zweites Ende durch eine dritte stationäre Schwenkachse (47) verschwenkbar ist.

7. Anordnung nach Anspruch 6, **dadurch gekennzeichnet, dass** der zweite Anlenkpunkt (31) weiter von der Ventilplatte (25) entfernt ist als der erste Anlenkpunkt (29).

8. Anordnung nach Anspruch 6, **dadurch gekennzeichnet, dass** der Halter (27) durch zwei voneinander beabstandete Stege (27a,b) gebildet ist, welche Stege (27a,b) sich senkrecht von der Ventilplatte (25) erheben.

9. Anordnung nach einem der Ansprüche 6 bis 8, **dadurch gekennzeichnet, dass** ein Support (49) vorgesehen ist, an welchem der Betätigungshebel (43) angelenkt ist.

10. Anordnung nach Anspruch 9, **dadurch gekennzeichnet, dass** der Support (49) sich entweder am Gehäuse (13) oder an der Betätigungseinrichtung (33) abstützt.

11. Anordnung nach Anspruch 6, **dadurch gekennzeichnet, dass** am ersten Ende des Betätigungshebels (43) ein Langloch (25) vorgesehen ist.

12. Anordnung nach einem der Ansprüche 1 bis 11, **dadurch gekennzeichnet, dass** die Betätigungseinrichtung (33) im Gehäuse (13) angeordnet ist.

13. Anordnung nach einem der Ansprüche 1 bis 12, **dadurch gekennzeichnet, dass** eine konvex gewölbte Kappe (37) vorgesehen ist, an welcher die Betätigungseinrichtung (33) inwendig angeordnet ist.

14. Anordnung nach Anspruch 13, **dadurch gekennzeichnet, dass** die gewölbte Kappe (37) den dritten Anschlussflansch verschliesst.

15. Anordnung nach einem der Ansprüche 13 oder 14, **dadurch gekennzeichnet, dass** die gewölbte Kappe (37) an dem dritten Anschlussflansch angeordnet ist und die Betätigungseinrichtung in Gestalt eines Kolben/Zylinderaggregats (33) teilweise in der Kappe aufgenommen ist.

16. Anordnung nach einem der Ansprüche 1 bis 14, **dadurch gekennzeichnet, dass** eine Abdichtung der Betätigungseinrichtung (33) gegenüber dem Gehäuseinneren über einen Membranbalg (34) erfolgt.

## Claims

1. Arrangement comprising a vacuum chamber, a vacuum pump and a plate valve (11) placed therebetween with
- a housing (13) for connecting the vacuum chamber with the vacuum pump,
- a first connecting flange (15) with a first opening (17) for the connection to a suction side of the vacuum pump,
- a valve seat (23) that is provided on the side of the first connecting flange (15) that is opposed to the first opening (17),
- a valve plate (25) that can cooperate with the valve seat (23),
- an actuation device (33) that is connected with the valve plate (25) and that allows for opening the valve to lift the valve plate (25) from the valve seat (23) and for closing the valve to push the valve plate (25) to the valve seat (23), wherein a lifting of the valve plate (25) takes place when opening the valve in a first step and a swivelling of the valve plate (25) takes place in a second step and vice versa when closing the valve the valve plate (25) first swivels and in a second step the valve plate (25) is applied to the valve seat (23) and
- a third connecting flange (39) on which the actuation device (33) is placed, wherein the third connecting flange (39) with the actuation device (33) is placed axially to the first connecting flange (15) and the actuation device (33) is formed by an actuation organ (35) that can be displaced linearly in a direction of displacement (36),
**characterized in that** in the open position the plane of the valve plate (25) is perpendicular to the plane of the second connecting flange (19).

2. Arrangement according to claim 1, **characterized in that** the actuation device (33) has a swivelling mechanism that is connected with the linearly displaceable actuation organ (35) and is designed in such a manner that a swivelling movement is generated during the linear displacement of the actuation organ (35).

3. Arrangement according to claim 2, **characterized in that** the swivelling movement is formed by a lever arrangement.

4. Arrangement according to one of the claims 2 to 3, **characterized in that** the swivelling mechanism is formed by a slide arrangement.

5. Arrangement according to one of the claims 1 to 4, **characterized in that** the actuation organ (35) is articulated hinged to the valve plate (25) and is swivellable about a first swivelling axis (30) relative to the valve plate (25).

6. Arrangement according to one of the claims 1 to 5, **characterized in that** a mount (27) is placed on the side of the valve plate (25) that is oriented to the housing inside, with a first articulation point (29) for the actuation organ (35) and a second articulation point (31) spaced from the first articulation point (29) for a swivellable actuation lever (43), the first end of which is swivellable about a second swivelling axis (41) defined by the second articulation point (31) and the second end of which is swivellable by a third fixed swivelling axis (47).

7. Arrangement according to claim 6, **characterized in that** the second articulation point (31) is further away from the valve plate (25) than the first articulation point (29).

8. Arrangement according to claim 6, **characterized in that** the mount (27) is formed by two spaced apart webs (27a, b), which webs (27a, b) rise perpendicularly from the valve plate (25).

9. Arrangement according to one of the claims 6 to 8, **characterized in that** a support (49) is provided to which the actuation lever (43) is articulated.

10. Arrangement according to claim 9, **characterized in that** the support (49) bears either on the housing (13), or on the actuation device (33).

11. Arrangement according to claim 6, **characterized in that** an oblong hole (25) is provided at the first end of the actuation lever (43).

12. Arrangement according to one of the claims 1 to 11, **characterized in that** the actuation device (33) is placed in the housing (13).

13. Arrangement according to one of the claims 1 to 12, **characterized in that** a convex vaulted cap (37) is provided on which the actuation device (33) is placed inside.

14. Arrangement according to claim 13, **characterized in that** the vaulted cap (37) closes the third connecting flange.

15. Arrangement according to one of the claims 13 or 14, **characterized in that** the vaulted cap (37) is placed on the third connecting flange and the actuation device in form of a piston/cylinder unit (33) is partially received in the cap.

16. Arrangement according to one of the claims 1 to 14, **characterized in that** a sealing of the actuation device (33) with respect to the housing inside is carried out by a membrane bellows (34).

## Revendications

1. Arrangement comprenant une chambre à vide, une pompe à vide et une soupape à plaque (11) disposée entre elles avec
- un bâti (13) pour relier la chambre à vide à la pompe à vide,
- une première bride de raccord (15) avec une première ouverture (17) pour la jonction à un côté aspiration de la pompe à vide,
- une seconde bride de raccord (19) avec une seconde ouverture (21) pour la jonction de la soupape à la chambre à vide devant être mise sous vide,
- un siège de soupape (23) qui est prévu sur le côté de la première bride de raccord (15) qui est opposé à la première ouverture (17),
- une plaque de soupape (25) qui peut coopérer avec le siège de soupape (23),
- un dispositif d'actionnement (33) qui est en relation avec la plaque de soupape (25) et qui permet, pour l'ouverture de la soupape, de soulever la plaque de soupape (25) du siège de soupape (23) et, pour la fermeture de la soupape, d'appuyer la plaque de soupape (25) contre le siège de soupape (23), cependant que, lors de l'ouverture de la soupape, dans une première étape, un soulèvement de la plaque de soupape (25) est effectué et, dans une seconde étape, un pivotement de la plaque de soupape (25) est effectué et vice-versa lors de la fermeture de la soupape la plaque de soupape (25) est tout d'abord pivotée et dans une seconde étape, la plaque de soupape (25) est appliquée contre le siège de soupape (23) et
- une troisième bride de raccord (39) sur laquelle le dispositif d'actionnement (33) est placé, cependant que la troisième bride de raccord (39) est placée avec le dispositif d'actionnement (33) axialement par rapport à la première bride de raccord (15) et le dispositif d'actionnement (33) est formé par un organe d'actionnement (35) déplaçable linéairement dans un sens de déplacement (36), **caractérisé en ce que** le plan de la plaque de soupape (25) est perpendiculaire au plan de la seconde bride de raccord (19) dans la position ouverte.

2. Arrangement selon la revendication 1, **caractérisé en ce que** le dispositif d'actionnement (33) possède un mécanisme de pivotement qui est en relation avec l'organe d'actionnement (35) déplaçable linéairement et est configuré tel que, lors du déplacement linéaire de l'organe d'actionnement (35), il est généré un mouvement de pivotement.

3. Arrangement selon la revendication 2, **caractérisé en ce que** le mécanisme de pivotement est formé par un dispositif à levier.

4. Arrangement selon l'une des revendications 2 à 3, **caractérisé en ce que** le mécanisme de pivotement est formé par un dispositif à coulisse.

5. Arrangement selon l'une des revendications 1 à 4, **caractérisé en ce que** l'organe d'actionnement (35) est articulé par une articulation à la plaque de soupape (25) et peut pivoter autour d'un premier axe de pivotement (30) par rapport à la plaque de soupape (25).

6. Arrangement selon l'une des revendications 1 à 5, **caractérisé en ce qu'**une monture (27) est placée sur le côté de la plaque de soupape (25) qui est orienté vers l'intérieur du bâti, avec un premier point d'articulation (29) pour l'organe d'actionnement (35) et un second point d'articulation (31) espacé du premier point d'articulation (29) pour un levier d'actionnement pivotant (43) dont la première extrémité peut pivoter autour d'un second axe de pivotement (41) défini par le second point d'articulation (31) et dont la seconde extrémité peut pivoter par un troisième axe de pivotement fixe (47).

7. Arrangement selon la revendication 6, **caractérisé en ce que** le second point d'articulation (31) est plus éloigné de la plaque de soupape (25) que le premier point d'articulation (29).

8. Arrangement selon la revendication 6, **caractérisé en ce que** la monture (27) est formée par deux entretoises (27a, b) espacées l'une de l'autre, lesquelles entretoises (27a, b) se dressent perpendiculairement de la plaque de soupape (25).

9. Arrangement selon l'une des revendications 6 à 8, **caractérisé en ce qu'**un support (49) est prévu sur lequel le levier d'actionnement (43) est articulé.

10. Arrangement selon la revendication 9, **caractérisé en ce que** le support (49) s'appuie soit sur le bâti (13), soit sur le dispositif d'actionnement (33).

11. Arrangement selon la revendication 6, **caractérisé en ce qu'**un trou oblong (25) est prévu à la première extrémité du levier d'actionnement (43).

12. Arrangement selon l'une des revendications 1 à 11, **caractérisé en ce que** le dispositif d'actionnement (33) est placé dans le bâti (13).

13. Arrangement selon l'une des revendications 1 à 12, **caractérisé en ce qu'**il est prévu un capuchon à voussure convexe (37) sur lequel le dispositif d'actionnement (33) est placé à l'intérieur.

14. Arrangement selon la revendication 13, **caractérisé en ce que** le capuchon voûté (37) ferme la troisième bride de raccord.

15. Arrangement selon l'une des revendications 13 ou 14, **caractérisé en ce que** le capuchon voûté (37) est placé sur la troisième bride de raccord et le dispositif d'actionnement en forme d'ensemble piston/cylindre (33) est partiellement logé dans le capuchon.

16. Arrangement selon l'une des revendications 1 à 14, **caractérisé en ce qu'**une étanchéité du dispositif d'actionnement (33) par rapport à l'intérieur du bâti est effectuée par un soufflet à membrane (34).
